# EUROPEAN PATENT SPECIFICATION

(11) **EP 1 410 661 B1**
(45) Date of publication and mention of the grant of the patent: **09.01.2008**
(21) Application number: 02744628.5
(22) Date of filing: 27.06.2002
(51) Int. Cl.: H04Q 7/30, H04Q 1/10

(54) **A COMMUNICATION SYSTEM CONFIGURABLE FOR INCREASED CAPACITY**
FÜR VERGRÖSSERTE KAPAZITÄT KONFIGURIERBARES KOMMUNIKATIONSSYSTEM
SYSTEME DE COMMUNICATION CONFIGURABLE POUR OFFRIR UNE PLUS GRANDE CAPACITE

(30) Priority: 29.06.2001 US 893431
(43) Date of publication of application: 21.04.2004
(73) Proprietor: BWA Technology, Inc., Las Vegas, NV 89109-0961 (US)
(72) Inventor: BERNHEIM, Henrik F., Bellevue WA 98004 (US)
(74) Representative: Schmidt, Steffen J.
(86) International application number: PCT/US2002/020151
(87) International publication number: WO 2003/003768

(56) References cited:
- WO-A-00/46958
- US-A- 6 011 785
- US-A- 6 016 313
- US-A- 6 035 340
- US-B1- 6 314 091
- US-B1- 6 366 584

## Description

### RELATED APPLICATIONS

The present application is related to United States patent applications entitled "FREQUENCY REUSE FOR POINT TO MULTIPOINT APPLICATIONS" and "SYSTEM AND METHOD FOR PROVIDING REDUNDANCY IN A SECTORED WIRELESS COMMUNICATION SYSTEM". The present application is also related to United States Patent Number 6,016, 313 entitled "SYSTEM AND METHOD FOR BROADBAND MILLIMETER WAVE DATA COMMUNICATION", issued 18 January 2000 and to U. S. Patent Applications Serial No. 09/434,832, entitled "SYSTEM AND METHOD FOR BROADBAND MILLIMETER WAVE DATA COMMUNICATION, "filed November 5,1999, and Serial No. 09/327,787, entitled "MULTI-LEVEL INFORMATION MAPPING SYSTEM AND METHOD, "filed June 7,1999.

### TECHNICAL FIELD

The present invention relates generally to wireless communication system and, more specifically, to the ability to build out communication infrastructure as demand for capacity increases.

### BACKGROUND

In the past, information communication between processor-based systems, such as local area networks (LAN) and other general purpose computers, separated by significant physical distances has been an obstacle to integration of such systems. The choices available to bridge the physical gap between such systems have not only been limited, but have required undesirable tradeoffs in cost, performance, and reliability.

One group of historically available communication choices includes such solutions as the utilization of a standard public switch telephone network (PSTN) or multiplexing signals over an existing physical link to bridge the gap and provide information communication between the systems. Although such solutions are typically inexpensive to implement, they include numerous undesirable traits. Specifically, since these existing links are typically not designed for high speed data communication, they lack the bandwidth through which to communicate large amounts of data rapidly. As in-building LAN speeds increase to 100 Mbps, the local PSTN voice grade circuits even more markedly represent a choke point for broadband metropolitan area access and therefore are becoming a less and less desirable alternative. Furthermore, such connections lack the fault tolerance or reliability found in systems designed for reliable transmission of important processor-based system information.

Another historically available group of communication choices is found at the opposite end of the price spectrum than those mentioned above. This group includes such solutions as the utilization of a fiber optic ring or point-to-point microwave communication. These solutions are typically cost prohibitive for all but the larger users. The point-to-point systems require a dedicated system at each end of the communication link which lacks the ability to spread the cost of such systems over a plurality of users. Even if these systems were modifiable to be point-to-multipoint, to realize the economy of multiple system use of some system elements, the present point-to-point microwave systems would not provide broadband data services but rather traditional bearer services such as TI and DS3. Furthermore, these systems typically provide a proprietary interface and therefore do not lend themselves to simple interfacing with a variety of general purpose processor-based systems.

Although a fiber optic ring provides economy if utilized by a plurality of systems, it must be physically coupled to such systems. As the cost of purchasing, placing, and maintaining such a ring is great, even the economy of multi-system utilization generally does not overcome the prohibitive cost of implementation.

Accordingly, point-to-multipoint systems such as shown and described in above referenced patent number 6,016,313, entitled "System and Method for Broadband Millimeter Wave Data Communication," have been developed to provide broadband communication infrastructure in an efficient and economical alternative. For example, a preferred embodiment point-to-multipoint system described in the patent number 6,016,313 provides for a network of point to multipoint hubs to establish cellular type coverage of a metropolitan area. Such systems are generally more economical to deploy than systems such as fiber optic networks, due to their use of wireless links avoiding the cost of laying fiber to all nodes on the network, and point-to-point microwave, due to the sharing of resources among several or many users. However, the cost of equipment, deployment, and maintenance is still appreciable in such systems.

The cost to initially deploy a communication system may be reduced by optimizing the equipment actually deployed to the actual subscribed capacity or the near term expected demand for capacity. A particular metropolitan area, although including many businesses and other entities having a need for broadband communication within a several mile radius of its center, may initially have a small subset of entities actually ready for utilization of such services.

For example, a portion of the business entities may initially forego the use of needed broadband communication because of such reasons as corresponding entities have not yet adopted the technology. Additionally, some portion of the entities having a need for broadband communication may have already adopted an earlier generation of broadband communication or quasi broadband solution, thus having expended a large sum of resources and capital, and therefore not yet be willing to adopt a recently introduced superior and/or less expensive solution. However, some subset of the entities having a need for broadband communication, possibly scattered throughout the metropolitan area, may have an immediate or near term desire and willingness to adopt the technology. In the somewhat longer term, more such entities may develop the desire and willingness to adopt the technology, such as due to others successfully adopting the technology, having fully realized the capital expense of a previously adopted system, or due to new entities arriving in the metropolitan area.

Where communication system infrastructure is optimized for the immediate or near term demand, a system may be deployed which economically and efficiently serves the demands of subscribers. Specifically, the actual equipment deployed may be substantially limited to only that which is currently or in the near term subscribed, thereby avoiding the expense of equipment which may remain unused or under utilized for some time to come. Moreover, deploying only that equipment which is currently necessary reduces maintenance and operating costs as there is a reduced set of equipment requiring service, repair, and other continuing operating costs.

However, deployment of a system optimized for current or near term demand may at some time in the future, or even very quickly, provide less than optimal service as demand increases. A need therefore exists in the art for a system providing desired communications optimized for an initial demand which is later configurable to serve increased demand. Preferably, such systems and methods are adapted to provide broadband communication services.

In addition to U.S. Patent 6,016, 313, mentioned above, documents of possible interest include U.S. Patent 6,011,785 and WO 00/46958.

As already noted, U.S. Patent 6,016,313 relates to a point to multipoint network. More specifically, U.S. Patent 6,016,313 provides a system and method for information communication between physically separated processor-based systems. Disclosed is a centralized communication array providing point to multipoint information communication between processor-based systems utilizing communication nodes. Such information communication may be between two processor-based systems, each utilizing communication nodes or may be between a processor-based system utilizing a communication node and a processor-based system coupled to the centralized communication array through a backbone.

U.S. Patent 6,011,785, in contrast, is directed to a base station for a cellular telephone system. Brielfy, U.S. Patent 6,011,785 describes a wireless communication system basestation making use of a wideband, multichannel digital transceiver having incorporated therein a time division multiple-access (TDM) bus for providing digital samples of a plurality of wireless communication channels, wherein the TDM bus is used as a cross-bar switch to permit dynamic allocation of modulator and demodulator signal processing resources. According to U.S. Patent 6,011,785, the techniques described therein allow various standards, even those having different channel bandwidths, to be serviced by the same basestation, with automatic redistribution of signal processing resources, eliminating the need to reconfigure the basestation when the loading of different types of wireless signaling traffic changes. In one example, the basestation exchanges radio frequency (RF) signals with a number of mobiles. The RF carrier signals are modulated with voice and/or data signals which are to be coupled to the PSTN by the basestation. The particular modulation in use may be any one of a number of different wireless standards such as the Advanced Mobile Phone Service (AMPS), time division multiple access (TDMA) such as IS-54B, code division multiple access (CDMA) such as IS-95, frequency hopping standards such as the European Groupe Speciale Mobile (GSM), personal communication network (PCN) standards, and the like.

WO 00/46958 is directed to a wireless network designed to deliver information communication services, such as telephony and data services, from a service provider, such as an ISP or LEC to metropolitan commercial customer locations. The network incorporates all system components necessary to connect customers, application equipment (e.g., phones, PBX's, computers) to the service provider's equipment, (e.g., C.O. switch, Tandem switch, point of presence (POP) gateway, ISP server, etc.). The network integrates all the various functional tasks at the component level, to build a comprehensive, cohesive network solution. The network architecture includes a distributed set of non-hierarchal nodes, connected together via wireless links. Nodes of the network can act both as termination points (i.e., connecting to the customer's or service provider's equipment) and/or as tandems, (i.e., routing traffic onto other nodes). Links between nodes can be point-to-point or point-to-multipoint.

A further need exists in the art for such systems to provide cost effective bridging of large physical distances between processor-based systems.

These and other objects and technical advantages are achieved by a system as defined in claim 1. Such a system allows the provision of added communication capacity through addition of components to previously deployed and suitably adapted communication equipment. Accordingly, communication infrastructure is provided to serve an initial level of capacity, such as that currently demanded or subscribed within a predefined service area. Preferably the communication infrastructure utilized according to the present invention is modular or includes modular components in order to facilitate supplemental equipment deployment in order to accommodate subsequent changes in demand and/or subscription.

Further aspects of the invention are defined in the dependent claims.

Hence, various embodiments of the present invention may be deployed which accommodate subsequent increases in demand, decreases in demand, and both increases and decreases in demand.

The foregoing has outlined rather broadly the features and technical advantages of the present invention in order that the detailed description of the invention that follows may be better understood. Additional features and advantages will be described hereinafter. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the scope of the invention as set forth in the appended claim. The invention, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, and the advantages thereof, reference is now made to the following descriptions taken in conjunction with the accompanying drawing, in which:
FIGURE 1A shows a block diagram of a communication hub having an initial deployment configuration;
FIGURE 1B shows a schematic diagram of a multi-port modem;
FIGURE 2 shows a sectored service area served by the communication hub of FIGURE 1A at an initial deployment;
FIGURE 3 shows a communication frame such as may be utilized by the communication hub of FIGURE 1A;
FIGURE 4 shows the sectored service area of FIGURE 2 at a subsequent time;
FIGURE 5 shows a block diagram of the communication hub of FIGURE 1A having a subsequent configuration;
FIGURE 6 shows a communication frame such as may be utilized in conjunction with the communication frame of FIGURE 3 by the communication hub of FIGURE 5;
FIGURE 7 shows an expansion bus structure useful in providing a communication hub;
FIGURES 8 and 9 show the expansion bus structure of FIGURE 7 having alternative configurations; and
FIGURE 10 shows the expansion bus structure of FIGURE 7 having an optional secondary expansion bus structure associated therewith.

### DETAILED DESCRIPTION

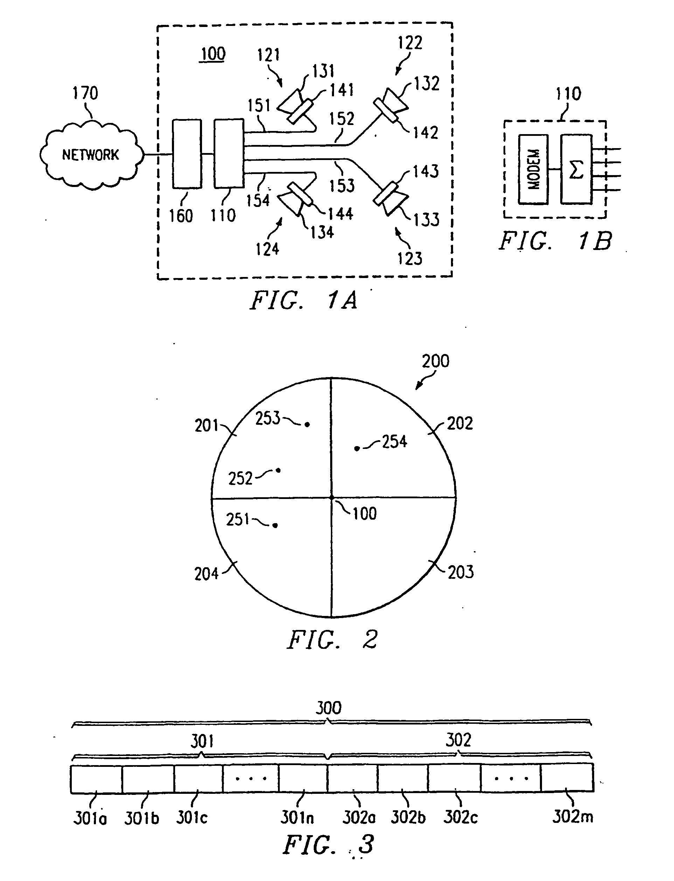

FIGURE 1A shows communication hub 100. Specifically, the illustrated embodiment of hub 100 includes a communication signal processor, shown as multi-port modem 110, coupled to a plurality of communication interface modules, shown as radio modules 121-124, via signal paths 151-154. As shown in FIGURE 1A, a communication signal processor of the hub may be coupled to additional communications apparatus, such as a network interface, data router, and/or the like, shown in the preferred embodiment as switch 160, which may include controller logic, such as a processor (CPU), memory (RAM), and instruction set suitable for intelligently controlling communications between communication hub 100, nodes 251-254, and/or network 170. Likewise, the hub may be provided with external communications, such as to network service providers, communications carriers, subscriber units, additional communication hubs, and/or the like, shown in the preferred embodiment as network 170. Network 170 may be any form of communication network, such as a public switched telephone network (PSTN), a local area network (LAN), a wide area network (WAN), the Internet, a cable communication system, a cellular network, a fiber optic network such as SONET or SDH, and/or the like.

Multi-port modem 110 may be provided in a number of configurations. For example, switching circuitry to provide selectable and/or controlled coupling of a signal between multi-port modem 110 and radio modules 121-124 may be utilized.

A signal splitter/combiner techniques, such as schematically illustrated in FIGURE 1B, is utilized to couple a signal between multi-port modem 110 and radio modules 121-124.

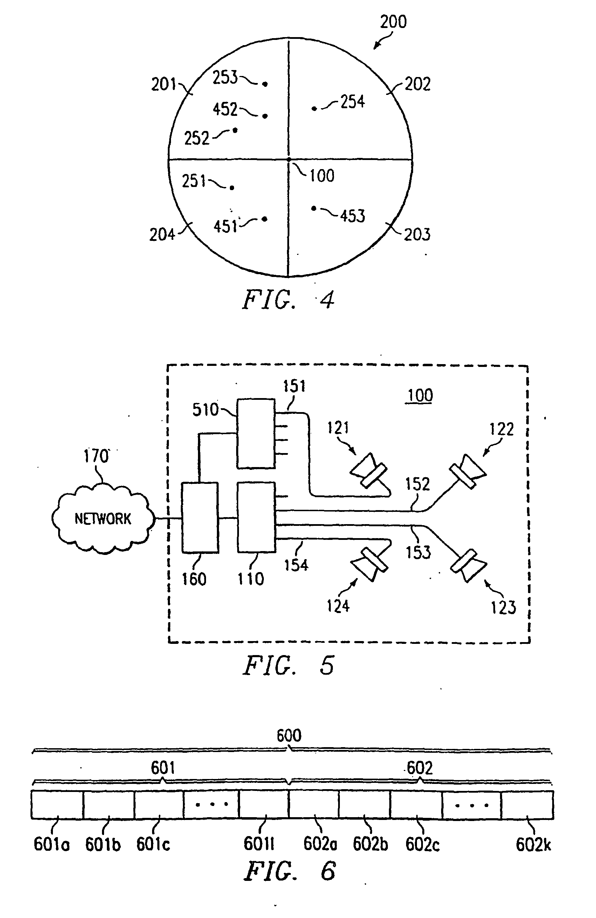

Preferably the communication interface modules are adapted to provide a plurality of diverse communication links and, thereby, provide communication services to various individual subscribers. For example, a preferred embodiment shown in FIGURE 2 defines service area 200 wherein radio module 121-124 provide communications within sectors 201-204 respectively. Accordingly, antennas 131-134 of radio modules 121-124 are preferably directional antennas having a predetermined beamwidth, such as 90° in the illustrated example. By properly orienting each of radio modules 121-124, service area 200 may be defined as a 360° area around communication hub 100.

Accordingly, various subscriber units, shown in FIGURE 2 as remote nodes 251-254, disposed with service area 200 may be provided with communication links through communication interface modules 121-124 and communication signal processor 110, such as to network 170 and/or systems coupled thereto. Nodes may include an antenna coupled to a modem, such as through a front-end module converting between RF and IF frequencies, itself coupled to a customer premise equipment interface. However, it shall be understood that any number of component configurations are acceptable for use at nodes 251-254.

It should be appreciated that communication hub 100 may be part of a larger communication network. For example, a plurality of communication hubs, possibly in communication through backbone links such as may be provided by network 170 and/or through the use of airlinks between the hubs, may be disposed throughout a metropolitan area to provide communication services. A cellular coverage pattern might be implemented such that a plurality of service areas substantially blanket a larger area, such as is shown and described in above referenced patent number 6,016,313.

Communication hub 100 is initially configured to service a first communication capacity. For example, nodes 251-254 may initially be identified for providing broadband communication services, such as by guaranteeing a particular quality of service and/or a predefined amount of available bandwidth, to ones of these nodes. Accordingly, the components of communication hub 100 may be substantially optimized to provide the desired communications. For example, modem 110 may be selected to provide the aggregate subscribed bandwidth, preferably including some excess capacity to accommodate near term increases in demand. Likewise, a number and/or configuration of radio modules 121-124 are selected to provide adequate coverage of the nodes. Specifically the sector sizes may be selected to provide substantially equally distributed coverage of the service area and/or of the nodes to be served. Additionally or alternatively, the number of sectors may be selected to provide a relatively small number of sectors, although being sufficient in number to provide benefits associated with sectorization. Accordingly, the preferred embodiment initial communication hub configuration illustrated in FIGURE 1A includes a single multi-port modem coupled to four radio modules to provide an initial configuration suitable for communications with nodes 251-254 using a relatively small number of communications components.

It should be appreciated that the configuration illustrated herein is merely exemplary and is not a limitation of the present invention. For example, more or less communication interface modules may be utilized by a communication hub of the present invention. Likewise, there is no limitation to the use of a particular antenna beamwidth and/or their orientation to provide either substantially non-overlapping coverage or composite 360° coverage.

However, examples initially provide communication coverage throughout the entire area to be serviced, even when demand does not currently exist in particular portions thereof, to thereby facilitate servicing future demand. Such examples are preferred as it is often desirable to reduce or eliminate the requirement that a service technician ascend a communication mast after deployment, such as to install communication interface modules. By initially deploying communication interface modules sufficient in number and/or orientation to allow communications throughout the entire area to be serviced, increases in demands for capacity associated with the addition of nodes in areas in which nodes previously did not exist may be addressed according to the present invention without requiring any up-mast alterations.

Of course, it should be appreciated that preferred embodiments of the present invention utilize modular communication interface components and, therefore, may be further optimized initially to omit communication interface modules not currently required. For example, radio module 123 associated with sector 203, having no nodes initially disposed therein, may be omitted from the initial configuration communication hub 100, such as where there is easy access to the deployed radio modules and/or where it is not desired to accommodate addition of capacity from centralized location.

The service area sectors of a preferred embodiment of the present invention utilize different communication channels or channel sets, such as different time division channels (TDMA), code division channels (CDMA), and/or frequency division channels (FDMA). Additionally or alternatively, other techniques for providing signal orthogonality may be relied upon in isolating signals of different sectors. For example, orthogonal polarization between sectors may be utilized. Similarly, where there is sufficient isolation provided by the communication interfaces, diversity techniques, such as spatial and/or angular, i. e., different antenna "views, "may be utilized to isolate the sector signals. The provision of substantially isolated signals within the sectors is preferred in order to facilitate increased capacity by allowing contemporaneous communications to be conducted in the sectors with minimized interference there between.

Frequency division multiple access (FDMA) techniques are utilized across sectors of the communication hub. Using unique frequency division channels or channel sets among the sectors of a service area facilitates increased capacity by allowing simultaneous communication between nodes disposed in various ones of the sectors and the communication hub, while avoiding interference. Accordingly, one or more of sectors 201-204 utilize channels or channel sets of frequencies different than another one or more of the sectors. As will be better understood from the discussion that follows, the use of such different channels or channel sets among the sectors is present even in an initial configuration utilizing a single modem to serve each such sector.

Communication services are provided to a plurality of subscribers using multiplexing techniques, such as the most preferred technique of time division multiple access (TDMA). Accordingly, a communication frame utilized, such as frame 300 of FIGURE 3, may include a plurality of burst periods, such as burst periods 301a-301n and 302a-302m. Time division duplexing (TDD), such as may be accomplished using forward link frame portion 301, having burst periods 301a-301n associated therewith, and reverse link frame portion 302, having burst periods 302a-302m associated therewith may also be utilized. It should be appreciated that the frame lengths, the burst period lengths, and/or the numbers of burst periods utilized may be selected to be any suitable value. Moreover, there is no limitation that the values be constant or symmetric. For example, the length of the forward link frame portion may be different than that of the reverse link frame portion, where asymmetric demand is present. Furthermore, the boundary between these frame portions maybe dynamically adjustable to provide dynamic asymmetric time division duplexing, as shown and described in above referenced patent number 6,016,313.

In operation, wherein TDMA signals are utilized to provide communication between a plurality of nodes and the communication hub and wherein frequency division channels are utilized among the sectors of the communication hub, communication hub 100 allocates burst periods of a TDMA frame among the nodes in communication therewith in order to provide desired bandwidth communications to each such node. However, as nodes 251-254 are disposed in various ones of sectors 201, 202, and 204, radio modules 121, 122, and 124 are in communication with the nodes at different frequencies. Accordingly, the modem 110, providing communication signal processing of the TDMA signal for each of these nodes, does so at a particular intermediate frequency (IF). To facilitate the use of this common IF at the radio modules of the different sectors, the radio modules 121-124 include front end module 141-144 respectively. Front end modules 141-144 are synthesized radio frequency (RF), such as microwave or millimeter wave, front-end modules accepting and transmitting radio frequency energy through antennas 131134 converted to/from the common IF for communication with modem 110.

For example, initial communication demand may be served by communication hub 100, such as under control of a controller of communication hub 100 or of a network of communication hubs (not shown), assigning one or more of forward link burst periods 301a - 301n and/or reverse link burst periods 302a-302m to particular ones of nodes 251-254 demanding communication services. As a specific example where each of nodes 251-254 demand equal and symmetric bandwidth, assuming frequency channels F1-F4 being assigned to sectors 201-204 respectively, burst periods 301a and 302a may carry information associated with node 251 on channel F4, burst periods 301b and 302b may carry information associated with node 252 on channel F1, burst periods 301c and 302c may carry information associated with node 253 on channel F1, and burst periods 301n and 302m may carry information associated with node 254 on channel F2.

Of course there is no requirement that the nodes be assigned a same number of burst periods as the other nodes and/or as a corresponding link direction. For example, where a node does not require bandwidth in a particular link direction, it may not have burst periods assigned, or a reduced number of burst periods assigned, in that link direction. Likewise, where one node requires a large amount of bandwidth and another node does not require a similar amount of bandwidth, a larger number and/or length of burst periods may be associated the node requiring the large amount of bandwidth.

As demand for communication services increase, communication hub 100 may be operated to serve some increased demand through allocation of the available resources without the need for configuration alteration. For example, if a node is added to the service area 200, assignment of burst periods may be adjusted to accommodate the added demand. However, at some point it is envisioned that an increase in demand will surpass communication hub 100's ability to adequately service the demand without configuration alteration.

Directing attention to FIGURE 4, a situation where the number on nodes within service area 200 approximately doubles through bringing online nodes 451-453. Accordingly, it is expected that the associated communication bandwidth demand will also increase appreciably. Such a situation may present bandwidth demand at a level no longer adequately serviceable by the configuration of FIGURE 1A having only a single modem 110. Accordingly, a second modem is preferably added to communication hub 100 to share in serving the demand.

Referring now to FIGURE 5, a subsequent configuration of communication hub 100, configured to optimally serve increased demand, is shown. Specifically, a second multi-port modem 510 has been added to provide additional communication signal processing capacity. For example, modems 110 and 510 may provide signal processing at a same baud rate and, therefore, the configuration of FIGURE 5 theoretically provide double the capacity as that of FIGURE 1A. It should be appreciated that the double capacity increase of FIGURE 5 is theoretical because modems 110 and/or 510 provide information communication in varying information densities, such as through the use of phase shift keying (PSK) or quadrature amplitude modulation (QAM), which may allow higher capacity with respect to particular links and/or nodes.

It should be appreciated that a multi-port modem is not required in the configuration of FIGURE 5 wherein modem 510 is coupled to a single radio module. Accordingly, rather than the multi-port modem, a single port modem may be utilized, if desired. However, it is preferred that a multi-port modem be utilized in order to facilitate configuration changes in response to future changes in bandwidth demand. As the multi-port modem utilizes relatively inexpensive signal splitting/combining techniques, it is envisioned that the use of such a multi-port modem where all such ports are not currently required will optimally provide for future flexibility. Of course, a single port, or other reduced number of ports, modem may be utilized, with future demand being accommodated through the addition of modem signal splitting/combining components, modem signal switching components, or even the exchange of the modem for one having a different number of ports.

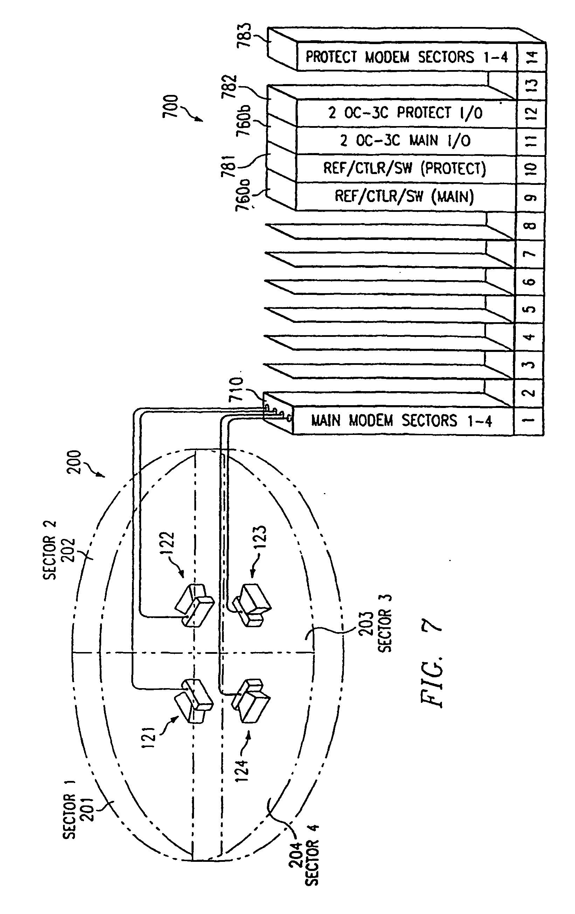

As discussed above, communication services are provided to a plurality of subscribers using multiplexing techniques, such as the most preferred technique of time division multiple access (TDMA). Accordingly, a communication frame utilized with respect to modem 510 is shown as frame 600 of FIGURE 6, including a plurality of burst periods, such as burst periods 601a-6011 and 602a-602k. Time division duplexing (TDD) is also utilized and, therefore, includes forward link frame portion 601, having burst periods 601a-6011 associated therewith, and reverse link frame portion 602, having burst periods 602a-602k associated therewith. As with frame 300 discussed above with respect to modem 110, the burst period lengths, and/or the numbers of burst periods utilized may be selected to be an suitable value. Moreover, there is no limitation that the frames or burst periods coincide wit those of frame 300. For example, the length of the forward link frame portion of frame 600 may be different than that of the forward link frame portion of frame 300.

In reconfiguring communication hub 100, one or more of the communication interface modules initially deployed are preferably decoupled from the initially deployed communication signal processor in favor of connection to the newly installed communication signal processor. For example, the radio module 121 of FIGURE 5 is decoupled from multi-port modem 110 and coupled to multi-port modem 510. Selection of a radio module or modules to couple to a newly added modem may be made based on a number of criteria, including a sector or sectors experiencing demand most closely matching the capacity of a particular modem, sectors serving nodes with a common quality of service, splitting sectors to distribute particular communication attributes between the modems, such as distributing demand or bursty behavior among the modems, and/or the like. In the embodiment illustrated in FIGURE 5, radio module 121 and radio modules 122-124 are selected for providing to modems of equal capacity in order to substantially evenly distribute communication bandwidth among the two modems. Specifically, in the simplified example of FIGURE 5, it is assumed that each of nodes 251-254 and 451-453 are operable at a same data rate and similar bandwidth requirements. Accordingly, coupling radio module 121 to modem 510 and radio modules 202-204 to modem 110 substantially evenly divides service of nodes 252, 253, and 452 (modem S 10) and nodes 251,254,451, and 453 (modem 110) among the modems.

It should be appreciated from FIGURES 4 and 5 that providing expanded capacity to the initial configuration of FIGURE 1A may be accomplished without a service technician having to ascend a mast upon which radio modules 121-124 are preferably disposed. Instead, a service technician may enter a radio shack or other service closet associated with communication hub 100, install additional modem equipment, such as a modem card, and affect a switch of coupling one or more radio units to the new modem. Because the initial configuration included radio module 123, serving sector 203, even though no service was initially demanded, added bandwidth demand originating in this sector is easily served (and quite possibly could be served without any service technician intervention what-so-ever as discussed above).

Of course, the initial configuration may be further optimized to the initially existing demand by not providing, then unneeded, radio module 123. Because of the modularity of the system components, radio module 123 maybe deployed only when communication service is required in sector 203. However, experience has revealed that most service providers prefer a solution which optimizes the amount of configuration alternation which may be performed without requiring up-mast modifications. Given the expected cost of a radio module, it is believed the incremental cost of inclusion of the initially unused radio module provides such an optimized configuration.

The use of a common IF for each radio module of the initial deployment facilitates the easy interchange of radio module to modem connections described herein. Of course, rather than using a common IF among the radio modules, radio module IFs may be matched to particular ports of the multi-port modems, thereby facilitating interchange of radio modules and modem connections, but only between particular ports of the multi-port modems. Such an alternative embodiment would likely decrease flexibility in selecting radio module distribution among the available modems, but may be desirable in order to accommodate particular radio frequencies at the radio modules or for other reasons.

It should also be appreciated from FIGURES 4 and 5 that, because the initial configuration includes signal orthogonality between the sectors of service area 200, which includes the use of frequency division channels, signals carrying the increased capacity associated with newly added modem 510 may be provided substantially simultaneously with and independent of signals carrying the capacity associated with original modem 110. For example, in operation wherein TDMA signals are utilized to provide communication between a plurality of nodes and the communication hub, communication hub 100 allocates burst periods of TDMA frames among the nodes in communication therewith in order to provide desired bandwidth communications to each such node. Specifically, communication demand may be served by communication hub 100, such as under control of a controller of communication hub 100 or of a network of communication hubs (not shown), assigning one or more of forward link burst periods 301a-301n and/or reverse link burst periods 302a-302m (modem 110) to particular ones of nodes 251, 254, 451, and 453 demanding communication services and one or more of forward link burst periods 601a-6011 and/or reverse link burst periods 602a-602k (modem 510) to particular ones of nodes 252, 253, and 452. As a specific example where each of nodes 251-254 and 451-453 demand equal and symmetric bandwidth, assuming frequency channels F1-F4 being assigned to sectors 201-204 respectively, burst periods 301a and 302a may carry information associated with node 251 on channel F4, burst periods 301b and 302b may carry information associated with node 451 on channel F4, burst periods 301c and 302c may carry information associated with node 254 on channel F2, and burst periods 301 n and 302m may carry information associated with node 453 on channel F3. Independently, burst periods 601a and 602a may carry information associated with nod 252 on Channel F1, burst periods 601b and 602b may carry information associated with node 253 on channel F1, and burst periods 601c and 602c may carry information associated with node 452 on channel F1.

In order to better aid configuration changes at the communication hub, components adapted to easily accept added components and/or allow removal of components are utilized. For example, an easily configurable radio module mounting structure, such as shown and described in copending and commonly assigned United States patent application serial number 09/267,492, filed March 12,1999 and entitled "Antenna Frame Structure Mounting and Alignment." may be utilized.

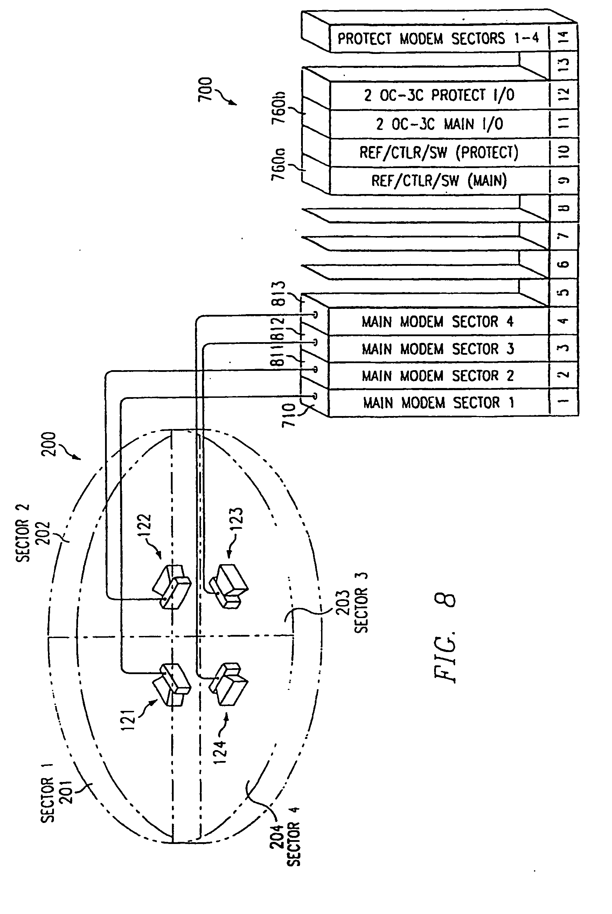

Additionally, an expandable communication hub bus assembly such as shown in FIGURE 7 may be utilized. The preferred embodiment of FIGURE 7 provides expandable bus structure 700 configured substantially as the initial deployment of FIGURE IA. Specifically, expandable bus structure 700 has installed therein modem board 710, corresponding to multi-port modem 110, and controller/switch board 760a and 1/O board 760b, corresponding to switch 160. Additionally, the expandable bus structure 700 includes redundancy boards 781-783 which provide communication fault tolerance as shown and described in the above referenced patent application 09/893,441 entitled "System and Method for Providing Redundancy in a Sectored Wireless Communication System" filed June 29, 2001. However, the use of redundant components may be omitted, if desired.

It should be appreciated that expandable bus structure 700 includes a plurality of open expansion slots to accept additional boards in providing system configuration alteration. For example, directing attention to FIGURE 8, expandable bus structure 700 can be seen having had additional modems installed therein, shown as modems 811, 812, and 813.

Accordingly, the configuration shown in FIGURE 8 provides increased capacity by coupling each of radio modules 121-124 to a respective modem 710 and 811-813.

It should be appreciated that the expansion bus structure of FIGURES 7 and 8 provide for the expanded capacity of FIGURE 8 through installation of modems to expandable bus structure 700 and the decoupling and coupling of radio module links. Accordingly, the expanded capacity is achieved in a centralized location, without requiring the service technician to ascend a mast or other structure associated with radio modules 121-124. Moreover, this expanded capacity is achieved without alteration of the controller/switch board 760a and I/O board 760b of FIGURE 7.

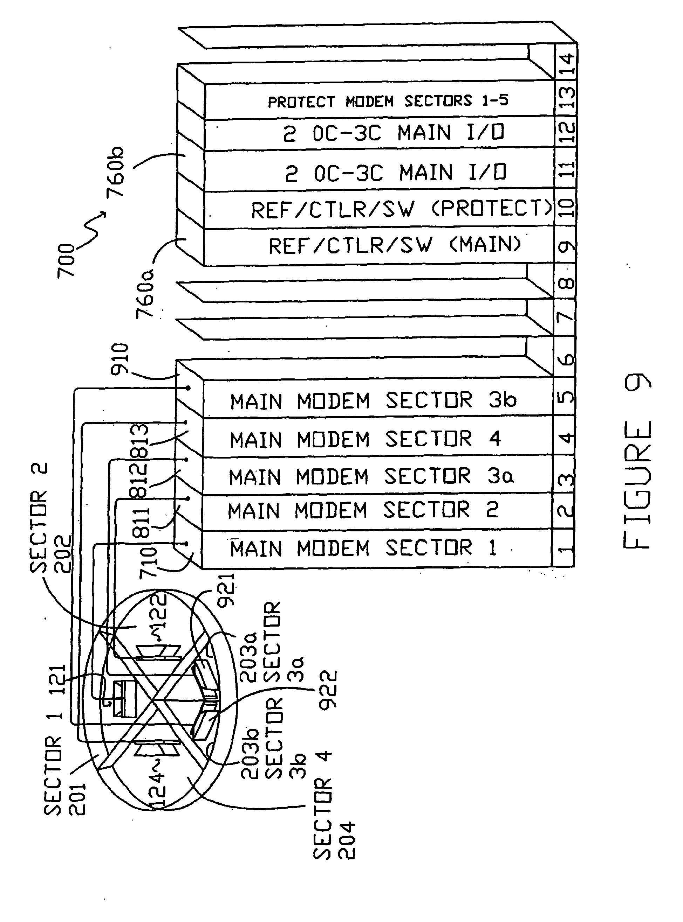

The bus structure of FIGURES 7 and 8 provide expansion capacity beyond that utilized in the configuration of FIGURE 8. Accordingly, not only is subsequent bandwidth demand accommodated through providing each initially deployed sector with its own modem, but such demand may be easily accommodated through further sectorization of the service area. Directing attention to FIGURE 9, a configuration wherein bandwidth demand in a particular sector exceeds that serviceable by a single modem and/or radio module is shown. Specifically, bandwidth demand associated with sector 203 has been determined to be sufficient to require capacity in addition to that which is adequately served by modem 812. Modem 812 may be replaced with a higher capacity modem. However, the use of such a higher capacity modem is expected to require substantial alteration at the remote nodes in communication therewith, such as corresponding modem replacements etc. Accordingly, the sector may be divided in to sub-sectors 203a and 203b, using radio modules 921 and 922 having beamwidths associated therewith which are more narrow than that of radio module 123. Correspondingly, another modem, modem 910, is introduced such that modem 812 serves sub-sector 203a and modem 910 serves sub-sector 203b.

It should be appreciated that the modularity of radio modules 210-214 accommodate the further sectorization of service area 200 through a simple interchange of the radio module or modules associated with a region of the service area requiring added capacity. Although it is possible to deploy such alternative radio modules initially, it is expected that the cost of these unused radio modules will outweigh the expense and inconvenience associated with having a service technician ascend the mast for their deployment when required. Accordingly, this expansion is not accomplished from a single centralized location as that associated with FIGURE 8 discussed above.

Although the sub-sector sizes used in providing increased capacity within sector 213 are illustrated in FIGURE 9 to be substantially the same, there is no such limitation. For example, it may be desired to provide a large sub-sector and a small sub-sector, such as where a relatively small region includes a large concentration of subscribers. It should be appreciated that this reasoning also holds true for the sectors of service area 200 and, therefore, there is no limitation that any or all the antenna beams be substantially equivalent, whether in width or length. It should also be appreciated that the sectors may be partially or completely overlapping, such as to provide the communication capacity of multiple modems within a particular region of service area 200.

Frequency division channels are utilized between sub-sectors 203a and 203b, thereby introducing an additional channel or channel set with the addition of the radio module or an existing channel set of radio module 213 is divided among radio modules 921 and 922. Accordingly, communications in each of these sub-sectors may be provided substantially simultaneously with and independent of communications associated with the other sub-sector and/or other sectors. However, it should be appreciated that such a frequency division necessitates alteration of communication frequencies at some or all of the remote nodes in sector 203. Accordingly, frequency agile remote nodes are utilized, such as may be provided by nodes having synthesized radio frequency (RF) front-end modules. Of course, the expansion of capacity through added sub-sectors may be provided by field replacing particular remote nodes to communicate using a new channel or channel set if desired.

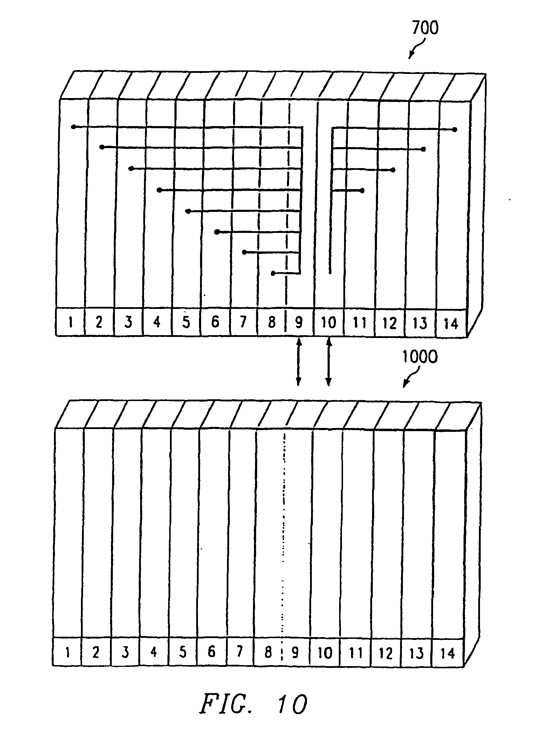

Expansion of capacity is not necessarily limited by the number of slots provided in expansion bus structure 700. For example, directing attention to FIGURE 10, the present invention may utilize a primary expansion bus structure (700) and a secondary expansion bus structure (1000), such as may be coupled through controller/switch circuitry. Accordingly, a number of expansion components greater than the available slots of a single expansion bus structure may be easily accommodated.

It should be appreciated that the communication bandwidth provided need not be associated with point-to-multipoint communications, i.e., hub to a plurality of remote nodes. For example, a radio module (not shown) having a very narrow, i.e., pencil, beam antenna may be deployed and coupled to a corresponding modem, which may either be coupled to other radio modules as discussed above or dedicated to the very narrow beam radio module. This radio module may be utilized to provide point-to-point communications, such as in order to provide network communication backhaul between communication hubs.

Although the present invention and its advantages have been described in detail, it should be understood that various changes, substitutions and alterations can be made herein without departing from the scope of the invention as defined by the appended claims.

## Claims

1. A point to multipoint communication system for providing duplex broadband wireless communication between a hub and a plurality of remote nodes, said communication system comprising:
a plurality of remote nodes (251-254), each having a remote communication link interface configured to provide duplex broadband wireless communication; and
a hub (100), **characterized by** said hub (100) including:
a plurality of communication link interfaces (121-124) having an antenna (131-134) with a predetermined beamwidth configured to accept and transmit radio frequency energy, said plurality of communication link interfaces (121-124) configured to provide duplex broadband wireless communication with said plurality of remote nodes (251-254);
a first communication signal processor (110) operatively connected to said plurality of communication link interfaces (121-124);
a communication controller (160) operatively connected to an external computer system; and
a bus structure (700) operatively connected to said first communication signal processor (110) and to said communication controller (160), wherein said bus structure (700) is adapted to accept a second communication signal processor (510) and operatively connect said second communication signal processor (510) to said communication controller (160); wherein:
each of the plurality of communication link interfaces (121-124) establishes a communication link with at least one of the plurality of remote nodes (251-254), whereby each one of said communication links is substantially independent of the others of said communication links;
said second communication signal processor (510) is adapted to be operatively connected to at least one of the plurality of communication link interfaces (121-124);
at least one of the plurality of communication link interfaces (121-124) is adapted to be disconnected from said first communication signal processor (110) and connected to said second communication signal processor (510), thereby providing communication capacity through each one of said communication links for each one of said plurality of communication link interfaces between the hub (100) and the plurality of remote nodes (251-254);
a plurality of communication signal processors (110, 510); and
said plurality of communication link interfaces (121-124) are adapted to be interchangeably connected to any one of the plurality of communication signal processors (110, 510).

2. The communication system of Claim 1 wherein the number of communication link interfaces (121-124) is greater than the number of communication signal processors (110, 510).

3. The communication system of Claim 1 wherein said bus structure (700) is an expandable bus structure (700) including a plurality of open expansion slots to accept additional boards in providing system configuration alteration, having installed therein a communication signal processor board (710) corresponding to communication signal processor (110), and a controller/switch board (760a) and an I/O board (760b) corresponding to the communication controller (160), and redundancy boards (781 - 783) which provide communication fault tolerance and additional communication signal processors (811 - 813) to provide increased capacity by coupling each of the communication link interfaces (121 - 124) to a respective communication signal processor (710 and 811 - 813).

4. The communication system of Claim 1 wherein the first and second communication signal processors (110, 510) and each of the plurality of communication link interfaces (121-124) operate using a common intermediate frequency.

5. The communication system of Claim 1 wherein each one of said plurality of communication link interfaces (121-124) is configured to provide communications to a predetermined sector (201-204) of a service area (200).

6. The communication system of Claim 5 wherein ones of said predetermined sectors (201-204) operate using a communication channel that is different than the communication channels of the others of said predetermined sectors (201-204) wherein each one of said communication channels comprises a forward portion and a reverse portion.

7. The communication system of Claim 1 wherein said first communication signal processor (110) comprises a modem (110).

8. The communication system of Claim 7 wherein said modem (110) is a multiport modem.

9. The communication system of Claim 7 wherein said modem (110) is capable of providing communications in varying information densities such as through the use of phase shift keying or quadrature amplitude modulation.

10. The communication system of Claim 5 wherein said communication link interfaces (121-124) provide partial or complete overlapping coverage of a sector or sectors.

## Patentansprüche

1. Punkt-zu-Mehrpunkt-Kommunikationssystem zum Bereitstellen einer drahtlosen Duplexbreitbandkommunikation zwischen einem Hub und einer Vielzahl von entfernten Knoten, wobei das Kommunikationssystem aufweist:
eine Vielzahl von entfernten Knoten (251 - 254), wobei jeder eine entfernte Kommunikationsverbindungsschnittstelle aufweist, die dazu konfiguriert ist, eine drahtlose Duplexbreitbandkommunikation bereitzustellen; und einen Hub (100), **dadurch gekennzeichnet, dass** der Hub (100) umfasst:
eine Vielzahl von Kommunikationsverbindungsschnittstellen (121 - 124) mit einer Antenne (131 - 134) mit einer vorbestimmten Strahlbreite, die dazu konfiguriert ist, Funkfrequenzenergie aufzunehmen und zu übertragen, wobei die Vielzahl von Kommunikationsverbindungsschnittstellen (121 - 124) dazu konfiguriert ist, eine drahtlose Duplexbreitbandkommunikation mit der Vielzahl von entfernten Knoten (251 - 254) bereitzustellen;
einen ersten Kommunikationssignalprozessor (110), der operativ mit der Vielzahl von Kommunikationsverbindungsschnittstellen (121 - 124) verbunden ist; einen Kommunikationscontroller (160), der operativ mit einem externen Computersystem verbunden ist; und
eine Busstruktur (700), die operativ mit dem ersten Kommunikationssignalprozessor (110) und mit dem Kommunikationscontroller (160) verbunden ist, wobei die Busstruktur (700) dazu eingerichtet ist, einen zweiten Kommunikationssignalprozessor (510) zu akzeptieren und den zweiten Kommunikationssignalprozessor (510) operativ mit dem Kommunikationscontroller (160) zu verbinden, wobei:
jede der Vielzahl von Kommunikationsverbindungsschnittstellen (121 - 124) eine Kommunikationsverbindung mit zumindest einem der Vielzahl von entfernten Knoten (251 - 254) herstellt, wobei jede der Kommunikationsverbindungen im Wesentlichen unabhängig von den anderen der Kommunikationsverbindungen ist;
der zweite Kommunikationssignalprozessor (510) dazu eingerichtet ist, operativ mit zumindest einer der Vielzahl von Kommunikationsverbindungsschnittstellen (121 - 124) verbunden zu sein;
zumindest eine der Vielzahl von Kommunikationsverbindungsschnittstellen (121 - 124) dazu eingerichtet ist, vom ersten Kommunikationssignalprozessor (110) abgekoppelt zu werden und mit dem zweiten Kommunikationssignalprozessor (510) verbunden zu werden, wodurch eine Kommunikationskapazität durch jede einzelne der Kommunikationsverbindungen für jede einzelne der Vielzahl von Kommunikationsverbindungsschnittstellen zwischen dem Hub (100) und der Vielzahl von entfernten Knoten (251 - 254) bereitgestellt wird;
eine Vielzahl von Kommunikationssignalprozessoren (110, 510); und
die Vielzahl von Kommunikationsverbindungsschnittstellen (121 - 124) dazu eingerichtet sind, mit jeglichem der Vielzahl von Kommunikationssignalprozessoren (110, 510) austauschbar verbunden zu sein.

2. Kommunikationssystem nach Anspruch 1, bei dem die Anzahl von Kommunikationsverbindungsschnittstellen (121 - 124) größer ist als die Anzahl von Kommunikationssignalprozessoren (110, 510).

3. Kommunikationssystem nach Anspruch 1, bei dem die Busstruktur (700) eine erweiterbare Busstruktur (700) ist, die eine Vielzahl von offenen Erweiterungssteckplätzen aufweist, um zusätzliche Karten beim Bereitstellen einer Systemkonfigurationsänderung aufzunehmen, wobei darin eine Kommunikationssignalprozessorkarte (710) installiert ist, die einem Kommunikationssignalprozessor (110) entspricht, und eine Controller/Schalter-Karte (760a) und eine I/O-Karte (760b), und zwar entsprechend dem Kommunikationscontroller (160), und Redundanzkarten (781 - 783), welche eine Kommunikationsfehlertoleranz bereitstellen, und zusätzliche Kommunikationssignalprozessoren (811 - 813), um eine erhöhte Kapazität bereitzustellen, und zwar mittels Koppelns jeder der Kommunikationsverbindungsschnittstellen (121 - 124) mit einem entsprechenden Kommunikationssignalprozessor (710 und 811 - 813).

4. Kommunikationssystem nach Anspruch 1, bei dem der erste und der zweite Kommunikationssignalprozessor (110, 510) und jede der Vielzahl von Kommunikationsverbindungsschnittstellen (121 - 124) unter Verwendung einer gemeinsamen Zwischenfrequenz arbeiten.

5. Kommunikationssystem nach Anspruch 1, bei dem jede der Kommunikationsverbindungsschnittstellen (121 - 124) dazu konfiguriert ist, einem vorbestimmten Sektor (201 - 204) eines Servicebereichs (200) Kommunikationen bereitzustellen.

6. Kommunikationssystem nach Anspruch 5, bei dem einer der vorbestimmten Sektoren (201 - 204) unter Verwendung eines Kommunikationskanals arbeitet, der sich von den Kommunikationskanälen der anderen der vorbestimmten Sektoren (201 - 204) unterscheidet, wobei jeder der Kommunikationskanäle einen Vorwärtsteil und einen Rückwärtsteil aufweist.

7. Kommunikationssystem nach Anspruch 1, bei dem der erste Kommunikationssignalprozessor (110) ein Modem (110) aufweist.

8. Kommunikationssystem nach Anspruch 7, bei dem das Modem (110) ein Mehrfachanschlussmodem ist.

9. Kommunikationssystem nach Anspruch 7, bei dem das Modem (110) in der Lage ist, Kommunikationen in veränderlichen Informationsdichten bereitzustellen, wie beispielsweise durch die Verwendung von Phasenumtastung oder Quadraturamplitudenmodulation.

10. Kommunikationssystem nach Anspruch 5, bei dem die Kommunikationsverbindungsschnittstellen (121 - 124) eine teilweise oder vollständige überlappende Abdeckung eines Sektors oder von Sektoren bereitstellen.

## Revendications

1. Système de communication point à multipoint pour assurer une communication sans fil à large bande en duplex entre un concentrateur et une pluralité de noeuds distants, ledit système de communication comprenant :
une pluralité de noeuds distants (251-254) ayant chacun une interface de liaison de communication distante configurée pour assurer une communication sans fil à large bande en duplex ; et
un concentrateur (100), **caractérisé en ce que** ledit concentrateur (100) inclut :
une pluralité d'interfaces de liaison de communication (121-124) ayant une antenne (131-134) avec une largeur de faisceau prédéterminée configurée pour accepter et transmettre une énergie de fréquence radio, ladite pluralité d'interfaces de liaison de communication (121-124) configurée pour assurer une communication sans fil à large bande en duplex avec ladite pluralité de noeuds distants (251-254) ;
un premier processeur de signaux de communication (110) opérationnellement connecté à ladite pluralité d'interfaces de liaison de communication (121-124) ;
un contrôleur de communication (160) opérationnellement connecté à un système d'ordinateur externe ; et
une structure de bus (700) opérationnellement connectée audit premier processeur de signaux de communication (110) et audit contrôleur de communication (160), dans lequel ladite structure de bus (700) est adaptée pour accepter un deuxième processeur de signaux de communication (510) et connecter opérationnellement ledit deuxième processeur de signaux de communication (510) audit contrôleur de communication (160) ; dans lequel :
chacune de la pluralité d'interfaces de liaison de communication (121-124) établit une liaison de communication avec au moins un de la pluralité de noeuds distants (251-254), d'où il résulte que chacune desdites liaisons de communication est substantiellement indépendante des autres desdites liaisons de communication ;
ledit deuxième processeur de signaux de communication (510) est adapté pour être opérationnellement connecté à au moins une de la pluralité d'interfaces de liaison de communication (121-124) ;
au moins une de la pluralité d'interfaces de liaison de communication (121-124) est adaptée pour être déconnectée dudit premier processeur de signaux de communication (110) et connectée audit deuxième processeur de signaux de communication (510), offrant ainsi une capacité de communication par l'intermédiaire de chacune desdites liaisons de communication pour chacune de ladite pluralité d'interfaces de liaison de communication entre le concentrateur (100) et la pluralité de noeuds distants (251-254) ;
une pluralité de processeurs de signaux de communication (110, 510) ; et
ladite pluralité d'interfaces de liaison de communication (121-124) sont adaptées pour être connectées de manière interchangeable à l'un quelconque de la pluralité de processeurs de signaux de communication (110, 510).

2. Système de communication selon la revendication 1, dans lequel le nombre d'interfaces de liaison de communication (121-124) est supérieur au nombre de processeurs de signaux de communication (110, 510).

3. Système de communication selon la revendication 1, dans lequel ladite structure de bus (700) est une structure de bus extensible (700) incluant une pluralité de connecteurs d'extension ouverts pour accepter des cartes additionnelles lors d'une modification de la configuration du système, ayant installée dans celui-ci une carte processeur de signaux de communication (710) correspondant au processeur de signaux de communication (110), et une carte contrôleur/commutateur (760a) et une carte E/S (760b) correspondant au contrôleur de communication (160), et des cartes redondantes (781-783) qui offrent une tolérance aux pannes de communication et des processeurs de signaux de communication additionnels (811-813) pour apporter une capacité augmentée en couplant chacune des interfaces de liaison de communication (121-124) à un processeur de signaux de communication respectif (710 et 811-813).

4. Système de communication selon la revendication 1, dans lequel le premier et le deuxième processeurs de signaux de communication (110, 510) et chacune de la pluralité d'interfaces de liaison de communication (121-124) fonctionnent en utilisant une fréquence intermédiaire commune.

5. Système de communication selon la revendication 1, dans lequel chacune de ladite pluralité d'interfaces de liaison de communication (121-124) est configurée pour offrir des communications à un secteur prédéterminé (201-204) d'une zone de service (200).

6. Système de communication selon la revendication 5, dans lequel les uns desdits secteurs prédéterminés (201-204) fonctionnent en utilisant un canal de communication qui est différent des canaux de communication des autres desdits secteurs prédéterminés (201-204) dans lequel chacun desdits canaux de communication comprend une portion d'aller et une portion de retour.

7. Système de communication selon la revendication 1, dans lequel ledit premier processeur de signaux de communication (110) comprend un modem (110).

8. Système de communication selon la revendication 7, dans lequel ledit modem (110) est un modem multiport.

9. Système de communication selon la revendication 7, dans lequel ledit modem (110) est apte à fournir des communications sous diverses densités d'informations tel que par l'intermédiaire de l'utilisation d'une modulation par déplacement de phase ou d'une modulation d'amplitude en quadrature.

10. Système de communication selon la revendication 5, dans lequel lesdites interfaces de liaison de communication (121-124) offre une couverture en chevauchement partiel ou complet d'un secteur ou de secteurs.
